# Europäisches Patentamt

# European Patent Office

# Office européen des brevets

(11) Publication number: **0 091 281**
**B1**

(12) **EUROPEAN PATENT SPECIFICATION**

(45) Date of publication of patent specification: **16.09.87**

(51) Int. Cl.⁴: **G 06 F 1/00**, G 06 F 11/00

(21) Application number: **83301815.3**

(22) Date of filing: **30.03.83**

(54) Circuit arrangement for detecting restoration of a momentary interruption.

(30) Priority: **30.03.82 JP 51686/82**

(43) Date of publication of application:
**12.10.83 Bulletin 83/41**

(45) Publication of the grant of the patent:
**16.09.87 Bulletin 87/38**

(84) Designated Contracting States:
**BE GB IT NL SE**

(56) References cited:
**EP-A-0 027 432**
**GB-A-2 072 381**
**GB-A-2 082 355**
**US-A-3 894 247**
**US-A-4 234 920**

**ELEKTRONIK, vol. 28, no. 24, 1979, page 76,
Munich, DE; R. WIESEMANN: "Universelle
Mikroprozessor-Reset-Schaltung"**

(73) Proprietor: **NEC CORPORATION
33-1, Shiba 5-chome, Minato-ku
Tokyo 108 (JP)**

(72) Inventor: **Sato, Osamu
c/o Nippon Electric Co., Ltd. 33-1 Shiba
Gochome
Minato-ku Tokyo 108 (JP)**

(74) Representative: **Orchard, Oliver John
JOHN ORCHARD & CO. Staple Inn Buildings
North High Holborn
London WC1V 7PZ (GB)**

## Description

### Background of the invention

This invention relates to a circuit arrangement for use in an apparatus comprising an electronic element, such as a microprocessor, and is operable with a source voltage in which a momentary interruption mandatorily takes place. Although a mobile telephone unit will be exemplified as the apparatus throughout the instant specification, it is to be noted that this invention is also well applicable to any apparatus other than the mobile telephone unit.

As will later be described with reference to some figures of the accompanying drawing, a mobile telephone unit is operated on a land mobile in order to carry out communication with a base station placed at a predetermined site. In the mobile telephone unit, a microprocessor is usually used as an electronic element to process various kinds of data signals necessary for the communication and to keep a conversation between the mobile telephone unit and the base station.

It is to be mentioned here that the land mobile is provided with a starter motor for driving an engine and an ignition switch for starting the starter motor and that an electric power source is usually common to and connected in parallel to the microprocessor and the starter motor.

In such a structure, a great deal of electric current is caused to flow through the starter motor when the ignition switch is closed to start the cell motor. An electric voltage is momentarily materially reduced not only across the starter motor but also across the microprocessor. The momentary reduction of the source voltage results in a malfunction or irregular operation of the microprocessor.

In order to protect the microprocessor from the malfunction or the irregular operation, a conventional circuit arrangement cooperates with the microprocessor and comprises a reset circuit for resetting the microprocessor at the start of the cell motor. Similar operation is also carried out by the use of the reset circuit at a transition from deenergization of the microprocessor to energization thereof. At any rate, the microprocessor is put into an initial state by the reset operation. The microprocessor searches in the initial state for a radio channel communicable with the base station and, thereafter, makes a conversation start. When the momentary interruption takes place during the conversation, the search operation should be repeated again even though search operation was previously carried out by the microprocessor.

### Summary of the invention

It is an object of this invention to provide a circuit arrangement which is capable of reasonably protecting a microprocessor from a malfunction or irregular operation even when a momentary interruption takes place at an electric power source.

It is another object of this invention to provide a circuit arrangement of the type described, which is capable of continuing a conversation after recovery from a short break of the conversation when the momentary interruption takes place at the electric power source.

The invention as claimed is intended to solve the aforementioned problems.

### Brief description of the drawing

Fig. 1 shows a block diagram of a power source circuit combined with a mobile telephone unit to which this invention is applicable;

Fig. 2 shows a block diagram of the mobile telephone unit illustrated in Fig. 1 with that power circuit alone illustrated which is to be coupled to the power source circuit;

Fig. 3 shows a block diagram of a conventional circuit arrangement coupled to a microprocessor used in the mobile telephone unit illustrated in Fig. 2;

Fig. 4 shows a circuit diagram of a reset circuit for use in the circuit arrangement illustrated in Fig. 3;

Fig. 5 shows a block diagram of a circuit arrangement according to a preferred embodiment of this invention, with the circuit arrangement coupled to a microprocessor;

Fig. 6 is a circuit diagram of a time constant section for use in the circuit arrangement illustrated in Fig. 5;

Fig. 7 shows a time chart for use in describing operation of the circuit arrangement illustrated in Fig. 6;

Fig. 8 shows a time chart for use in describing operation of the circuit arrangement illustrated in Fig. 7 upon occurrence of a momentary interruption;

Fig. 9 shows a block diagram for use in describing in detail the microprocessor illustrated in Fig. 5; and

Fig. 10 is a flow chart for use in describing operation of the microprocessor illustrated in Fig. 9.

### Description of the preferred embodiments

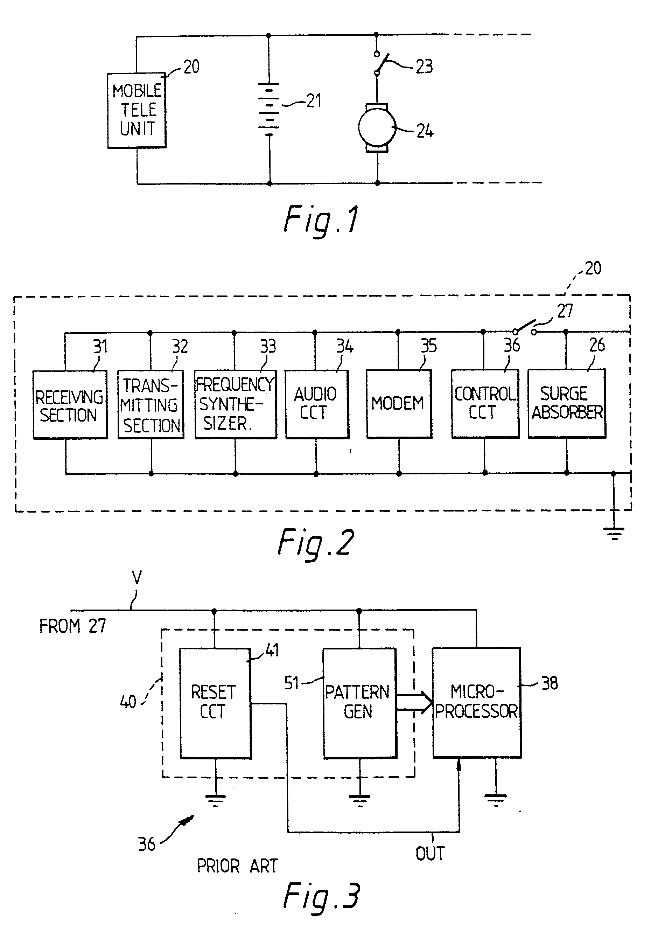

Referring to Figs. 1 and 2, a land mobile telephone unit 20 to which this invention is applicable is carried by a land mobile to communicate with a base station (not shown) placed at a predetermined site and for use in combination with an electric power source, namely, a battery 21 for providing an electric source voltage V. The source voltage V is regularly equal to a nominal voltage of, for example, 12 volts. The battery is connected through an ignition switch 23 across a starter motor 24 for starting an engine (not shown) of the land mobile. As shown in Fig. 1, the mobile telephone unit 20 is connected relative to the battery 21 in parallel with a series connection of the starter motor 24 through the ignition switch 23 and with the other electric parts (not shown) of the land mobile.

Let the ignition switch 23 be closed by a driver to energize the starter motor 24 and to start the engine in the well known manner. A great deal of electric current is caused to flow through the starter motor 24 when the starter motor 24 is energized through the battery 21. The electric current often exceeds 100 A. Accordingly, the source voltage is momentarily materially reduced from the nominal voltage at the start of the engine and brings about a momentary interruption and subsequent restoration after lapse of the momentary interruption. The momentary interruption lasts a duration variable between 100 milliseconds and 300 milliseconds. As a result, the source voltage supplied to the mobile telephone unit 20 is also reduced during the momentary interruption.

In Fig. 2, the mobile telephone unit 20 comprises a surge absorber 26 connected across the electric power source 21 (Fig. 1) to absorb a surge accompanying the variation in the source voltage V and a source switch 27 connected to the surge absorber 26. The source voltage V is supplied through the source switch 27 to a receiving section 31, a transmitting section 32, a frequency synthesizer 33, an audio circuit 34, and a modulator-demodulator (MODEM) 35 when the source switch 27 is closed. All of these elements are well known in the art and therefore will not be described in detail any longer.

During closure of the source switch 27, the source voltage V is also supplied to a control circuit 36 connected through the source switch 27 to the electric power source 21.

Referring to Fig. 3, the control circuit 36 comprises a microprocessor 38 put into operation by the source voltage V and regularly operable as long as the nominal voltage is given as the source voltage V to the microprocessor 38. During regular operation, the microprocessor 38 at first controls the transmitting section 32, the frequency synthesizer 33, and the MODEM 35 in the known manner to search for a radio channel communicable with the base station. Thus, the microprocessor 38 initially carries out operation in a control mode. Thereafter, the microprocessor 38 is put into operation in a conversation mode to keep a conversation between the mobile telephone unit 20 and the base station.

However, when the source voltage V is momentarily reduced by closure of the ignition switch 23 (Fig. 1), a malfunction or irregular operation is inevitable in the microprocessor 38. In order to protect the microprocessor 38 from the malfunction or the irregular operation, the control circuit 36 comprises a circuit arrangement 40 cooperating with the microprocessor 38.

It is to be noted here that the source voltage V is changed to selectively put the circuit arrangement 40 from deenergization to energization at a first transition in the source voltage V and from energization to deenergization at a second transition. Thus, the source voltage V is changed at a beginning of energization of the battery 21 and at an end of the energization.

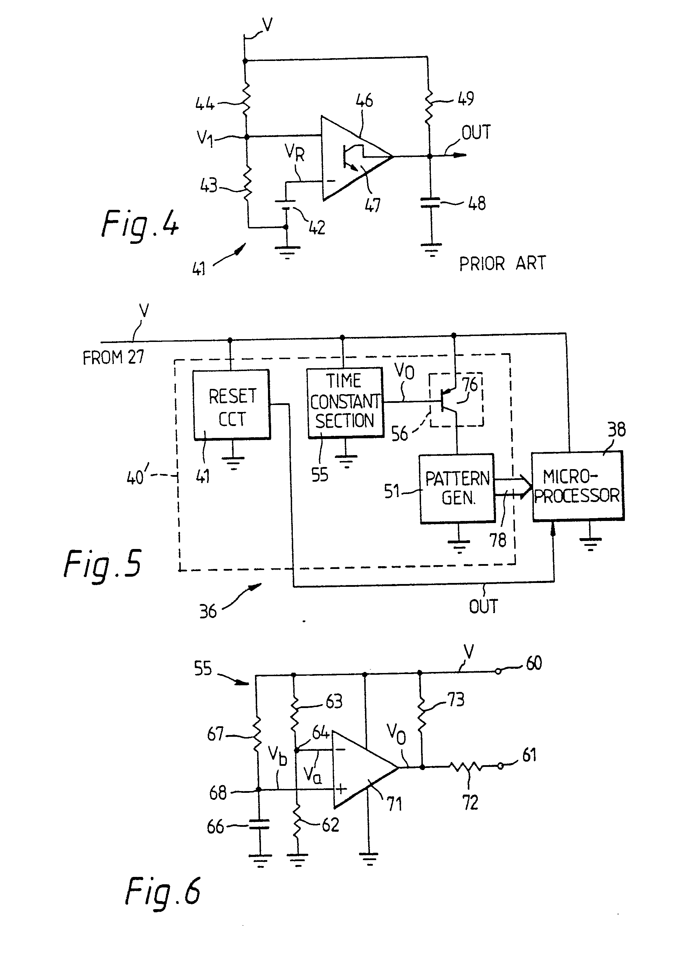

Referring to Fig. 4 together with Fig. 3, the circuit arrangement 40 comprises a reset circuit 41 for putting the microprocessor 38 selectively in a reset state and in a released state. More particularly, the reset circuit 41 illustrated in Fig. 4 comprises a reference voltage source 42 for providing a reference signal having a reference voltage $V_R$ and a voltage divider having first and second resistors 43 and 44. The voltage divider produces a voltage divided signal having a divided voltage $V_1$ determined by the first and the second resistors 43 and 44. The reference signal and the voltage divided signal are supplied to a comparator 46 comprising a comparator portion and an output portion symbolized by an NPN output transistor 47. When the divided voltage $V_1$ becomes lower than the reference voltage $V_R$ as a consequence of the reduction in the source voltage V, the output transistor 47 becomes conductive. When the divided voltage $V_1$ is not lower than the reference voltage $V_R$, the output transistor 47 becomes nonconductive.

A local time constant circuit is connected to the comparator 46 and supplied with the source voltage V. The time constant circuit comprises a capacitor 48 and a resistor 49, as shown in Fig. 4, to provide an output signal OUT across the capacitor 48. The output signal OUT takes a low level when the output transistor 47 is changed from a nonconductive state to a conductive one and when electric charges are quickly discharged from the capacitor 48 through the output transistor 47. This change rapidly proceeds due to the quick discharge of the electric charges. The output signal OUT of the low level serves to put the microprocessor 38 in the reset state. On the other hand, the output signal OUT gradually becomes high when the output transistor 47 is changed from the conductive state to the nonconductive one. This is because the time constant circuit has a time constant determined by the resistor 49 and the capacitor 48. In this event, the output signal OUT serves to put the microprocessor 38 in the release state when the output signal OUT exceeds a prescribed voltage at which the microprocessor 38 becomes operable.

At any rate, the reset circuit 41 puts the microprocessor 38 in the released state at the first transition, in the reset state during the momentary interruption, and again in the released state at the restoration.

At the beginning of the released state, the microprocessor 38 is put into the control mode to carry out a predetermined initial operation, as known in the art. The predetermined initial operation is started by detecting a call number, namely, a predetermined pattern assigned to the mobile telephone unit 20.

In order to produce a pattern signal representative of the call number, the circuit arrangement 40 comprises a pattern generator 51 (Fig. 3) constituted by a read-only memory. The pattern signal is initially read out of the pattern generator 51 in the predetermined initial operation and is supplied to the microprocessor 38. The microprocessor 38 searches for a radio channel communicable with the base station with reference to the pattern signal.

With this circuit arrangement 40, it is possible to protect the microprocessor 38 from the malfunction or the irregular operation even when the source voltage V is extremely reduced from the nominal voltage because the microprocessor 38 is instantly put into the reset state on occurrence of the momentary interruption. However, the microprocessor 38 should necessarily be put in the control mode at both of the first transition and the restoration from the momentary interruption, in order to carry out the predetermined initial operation. Accordingly, the microprocessor 38 should be repeatedly put in the control mode even when the microprocessor 38 was previously put into operation in the conversation mode prior to the momentary interruption. This means that a conversation prior to the momentary interruption can not be continued after the restoration without searching for a channel communicable with the base station. The circuit arrangement 40 is therefore disadvantageous as described in the preamble of the instant specification.

Referring to Figs. 5 and 6, a circuit arrangement 40' according to a preferred embodiment of this invention is similar to that illustrated in Fig. 3 except that a time constant section 55 shown in Fig. 6 in detail and a switch 56 are included in the illustrated circuit arrangement 40'. The time constant section 55 illustrated in Fig. 6 has a source terminal 60 connected to the source switch 27 (Fig. 2) and an output terminal 61 connected to the switch 56 illustrated in Fig. 5. The time constant section 55 comprises, as a voltage divider, a series circuit of resistors 62 and 63 between the source terminal 60 and ground and produces a reference voltage $V_a$ at a first point 64 of connection between the resistors 62 and 63. Let the resistor 62 have a resistance equal to that of the resistor 63.

A series connection of a capacitor 66 and a resistor 67 is also connected between the source terminal 60 and ground to provide a variable voltage $V_b$ at a second point 68 of connection between the capacitor 66 and the resistor 67. A time constant is determined by the capacitor 66 and the resistor 67 in a manner to be described later and is equal to, for example, 400 milliseconds. The variable voltage $V_b$ is gradually variable at a rate determined by the time constant after each of the first and the second transitions and upon occurrence of the momentary interruption.

The time constant section 55 comprises a comparator 71 having a negative and a positive terminal connected to the first and the second points 64 and 68 of connection, respectively. The comparator 71 compares the variable voltage $V_b$ with the reference voltage $V_a$ to produce a result signal $V_o$ representative of a result of comparison. The result signal $V_o$ has a low level and will be called a first signal while the variable voltage $V_b$ is not higher than the reference voltage $V_a$. Otherwise, the result signal $V_o$ has a high level and will be called a second signal. Anyway, the result signal $V_o$ is supplied through a resistor 72 and the output terminal 61 to the switch 56 illustrated in Fig. 5. The resistor 72 serves to prevent an excessive amount of current from flowing through the switch 56. In addition, a pull-up resistor 73 is connected between the source terminal 60 and the comparator 71 to pull up the output signal $V_o$ when the output signal $V_o$ has the high level.

Turning back to Fig. 5, the switch 56 comprises a PNP transistor 76 having an emitter and a collector which are connected to the source switch 27 and the pattern generator 51, respectively, and a base supplied with the result signal $V_o$ from the time constant section 55 illustrated in detail in Fig. 6. In this structure, the PNP transistor 76 becomes conductive as long as the first signal is given as the result signal $V_o$ and, otherwise, the PNP transistor 76 becomes nonconductive.

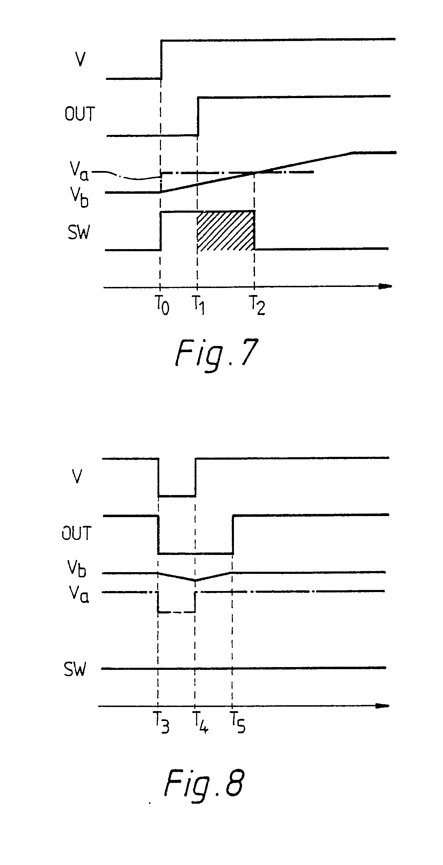

Referring to Fig. 7 together with Fig. 5, the source voltage V is changed at a first time instant $T_0$ at which the source switch 27 is closed with the ignition switch 23 opened. The first time instant $T_0$ is representative of preparation for energization of the microprocessor 38 by the battery 21 (Fig. 1). As shown at OUT in Fig. 7, the microprocessor 38 is changed from the reset state to the released one at the first transition (depicted at $T_1$) delayed relative to the first time instant $T_0$. In other words, the microprocessor 38 is put from the deenergization to the energization at the first transition $T_1$.

On the other hand, the voltage divider 62—63 illustrated in Fig. 6 produces the reference voltage $V_a$ (depicted at a dot-and-dash line in Fig. 7) which is developed at the first time instant $T_0$. The variable voltage $V_b$ at the second point 68 of connection gradually rises at the rate determined by the time constant, as depicted along a solid line at $V_b$. The PNP transistor 76 illustrated in Fig. 5 is kept conductive while the variable voltage $V_b$ is not higher than the reference voltage $V_a$, as depicted at SW in Fig. 7 and the first signal is therefore supplied as the result signal $V_o$ to the PNP transistor 76. During presence of the first signal, the pattern generator 51 is enabled by the source voltage V, as is readily understood from Fig. 5. Thus, the PNP transistor 76 serves to produce an enable signal in response to the first signal. The pattern signal is read out of the pattern generator 51 during the presence of the first signal and is supplied to the microprocessor 38 through a bus 78 connecting the pattern generator 51 with the microprocessor 38. Therefore, the bus 78 serves to transfer the pattern signal from the pattern generator 51 to the microprocessor 38.

The PNP transistor 76 becomes nonconductive at a second time instant $T_2$ at which the variable voltage $V_b$ is higher than the reference voltage $V_a$ and the second signal is therefore produced as the result signal $V_o$ from the time constant section 55. Thus, the PNP transistor 76 produces no enable signal during the presence of the second signal.

The microprocessor 38 is put in the energization at the first transition $T_1$ and receives the pattern signal to carry out the initial operation by the use of the pattern signal. Such an initial operation is carried out within a certain duration of, for example, 50 milliseconds and the pattern signal should continuously last at least the duration for the initial operation.

In Fig. 8, the pattern signal lasts a time interval (depicted at a hatched area in Fig. 7) between the first transition $T_1$ and the second time instant $T_2$. The time interval between the first transition $T_1$ and the second time instant $T_2$ is determined by the reference voltage $V_a$, the source voltage $V$, and the time constant. Let the time interval be equal to 200 milliseconds.

Referring to Fig. 8 and Fig. 5 again, the source voltage V is subjected to the momentary interruption at a third time instant $T_3$ and the restoration at a fourth time instant $T_4$. The reset circuit 41 produces the output signal OUT simultaneously with the momentary interruption so as to put the microprocessor 38 into the reset state and to protect the microprocessor 38 from the malfunction, as depicted at OUT in Fig. 8. Thereafter, the reset circuit 41 put the microprocessor 38 into the released state at a fifth time instant $T_5$ delayed relative to the fourth time instant $T_4$.

During the momentary interruption, the variable voltage $V_b$ in the time constant section 55 is gradually reduced towards the reference voltage $V_a$, dependently on the time constant determined by the capacitor 66 and the resistor 67. In this event, the variable voltage $V_b$ is kept higher than the reference voltage $V_a$.

When the momentary interruption is restored at the fourth time instant $T_4$, the variable voltage $V_b$ gradually rises from the fourth time instant $T_4$ by the restoration from the momentary interruption. As a result, the variable voltage $V_b$ does not become lower than the reference voltage $V_a$ during the momentary interruption and also during that reset state of the microprocessor 38 which results from the momentary interruption. Accordingly, the PNP transistor 76 never becomes conductive during the momentary interruption, as depicted at SW in Fig. 8. The microprocessor 38 does not carry out the initial operation because no pattern signal is received by the microprocessor 38.

Thus, the microprocessor 38 can detect the restoration from the momentary interruption by no reception of the pattern signal. In other words, the enable signal is produced through the PNP transistor 76 to read the pattern signal out of the pattern generator 51 only upon detection of the first transistion $T_1$ (Fig. 7). From this fact, it is readily understood that a combination of the time constant section 55 and the switch 56 is operable to detect the first transition $T_1$ and the restoration $T_5$ to produce the enable signal only upon detection of the first transition $T_1$.

Herein, attention is directed to the time constant determined by the capacitor 66 and the resistor 67 (Fig. 6). It should be noted here that the momentary interruption is variable within a predetermined duration of, for example, 500 milliseconds because the momentary interruption lasts 300 milliseconds at most. The predetermined duration may be referred to as a first predetermined duration. In addition, the time interval between the first transition $T_1$ and the second time instant $T_2$ may be referred to as a second predetermined duration and should be longer than 50 milliseconds, as mentioned in conjunction with Fig. 7. Under the circumstances, the time constant must be determined in consideration of the reference voltage $V_a$ and the first and the second predetermined durations. Furthermore, the nominal voltage of the source voltage V is related to the time constant. More specifically, the time constant is such that the variable voltage $V_b$ does not becomes lower than the reference voltage $V_a$ within the first predetermined duration and is kept lower than the reference voltage $V_a$ within the second predetermined duration after the first transition $T_1$.

In Fig. 5, the microprocessor 38 is put in the control mode with reference to the pattern signal on detection of the first transition $T_1$ and in the conversation mode on detection of the restoration from the momentary interruption without being again put in the control mode. The conversation can therefore be continued.

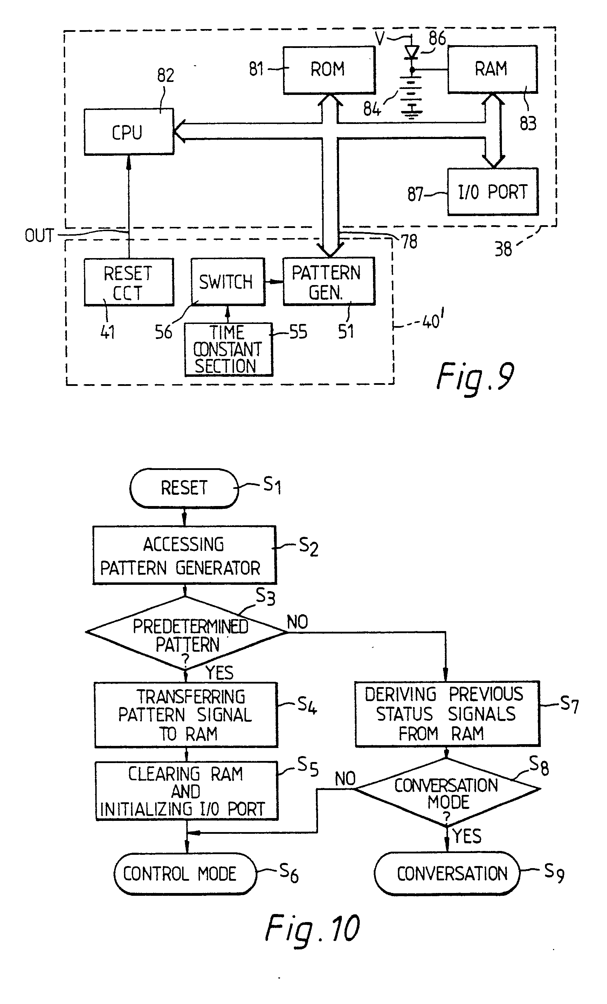

Referring to Fig. 9, the microprocessor 38 is operable in cooperation with a circuit arrangement 40' similar to that illustrated in Fig. 5. The illustrated microprocessor 38 is put into operation to continue a previous conversation which is related to a previous call and which is interrupted by the momentary interruption. The microprocessor 38 comprises a read-only memory (ROM) 81 for storing predetermined programs, each of which consists of a sequence of instructions. The control and the conversation modes are defined by the programs. A central processing unit (CPU) 82 is for executing or processing each of the instructions. A random access memory 83 is operable to memorize previous status signals accompanied by the previous call and representative of either the control mode or the conversation mode. The random access memory 83 is coupled to a storage battery 84 which can put the random access memory 83 into operation which is supplied with the source voltage V through a diode 56. The random access memory 83 is energized by the power source 21 (Fig. 1) during closure of the source switch 27 (Fig. 2) with the storage battery 84 charged by the source voltage V and is, otherwise, energized by the storage battery 84. In this structure, no contents are lost from the random access memory 83 when the momentary interruption takes place or when the source switch 27 is opened.

In addition, the illustrated microprocessor 38 comprises an input-output port 87 to be coupled to the transmitting section 32, the frequency synthesizer 33, and the MODEM 35, all of which are illustrated in Fig. 2. The read-only memory 81, the central processing unit 82, and the input-output port 87 are all connected to the power source 21 through the source switch 27, although connections are omitted from this figure.

The microprocessor 38 distinguishes between the first transition and the restoration in the manner described in conjunction with Figs. 5 through 8 by deciding whether or not the pattern signal is received. Let the first transition or the momentary interruption take place. The microprocessor 38 carries out operation in the control mode on occurrence of the first transition and, otherwise, in the conversation mode. At any rate, the random access memory 83 stores the previous status signals relating to the previous call.

Referring to Fig. 10 together with Figs. 7, 8, and 9, the central processing unit (CPU) 82 is put in the reset state at a first stage $S_1$ by the reset circuit 41. The source voltage V is assumed to be raised to the nominal voltage anyway to put the microprocessor 38 in the released state. At a second stage $S_2$, the pattern generator 51 is accessed by the central processing unit 82. When the released state results from occurrence of the first transition $T_1$, the switch 56 becomes conductive and, therefore, the pattern signal is read out of the pattern generator 51. When the released state results from the restoration from the momentary interruption, no pattern signal is produced from the pattern generator 51 because the switch 56 isolates the pattern generator 51 from the power source 21. The central processing unit 82 judges at a third state $S_3$ whether or not a pattern represented by the pattern signal is coincident with the predetermined pattern.

When the coincidence is detected at the third stage $S_3$, the central processing unit 82 makes the pattern generator 51 transfer the pattern signal to the random access memory 83 at a fourth stage $S_4$. At a fifth stage $S_5$, the random access memory 83 is cleared to erase the previous status signals from the random access memory 83 and the input-output port 87 is initialized by carrying out the initial operation in accordance with the program stored in the read-only memory 81. Thereafter, the microprocessor 38 is put in the control mode at a sixth stage $S_6$ for searching for the channel.

At the third stage $S_3$, let no predetermined pattern be detected by the central processing unit 82 as a result of the restoration from the momentary interruption. In this event, the third stage $S_3$ is followed by a seventh stage $S_7$ at which the previous status signals are derived from the random access memory 83 under control of the central processing unit 82.

The central processing unit 82 judges at an eighth stage $S_8$ whether or not the previous status signals specify the conversation mode. If the conversation mode is specified by the previous status signals, the eighth stage $S_8$ proceeds with the sixth stage $S_6$. Otherwise, a ninth stage $S_9$ follows the eighth stage $S_8$ to continue the conversation which was made before the momentary interruption.

With the circuit arrangement, the pattern generator 51 produces the pattern signal only when the microprocessor 38 is put from the deenergization to the energization at the first transition. A power consumption is therefore reduced as compared with the conventional circuit arrangement illustrated in Fig. 3.

In the microprocessor 38 illustrated in Fig. 9, the random access memory 83 is for use in combination with the storage battery 84 to keep the previous status signals. This means that an expensive memory, such as an EEROM, may not be used to store the previous status signals.

While this invention has thus far been described in conjunction with a preferred embodiment thereof, it will be readily possible for those skilled in the art to put this invention into practice in various manners. For example, the circuit arrangement may be combined with various electronic elements except the microprocessor.

## Claims

1. A circuit arrangement for use in combination with a source switch (27) and a voltage source means which is operable in cooperation with the source switch for producing a source voltage which selectively changes the circuit arrangement from a state of deenergization to a state of energization at a first transition ($T_1$) and from the state of energization back to the state of deenergization at a second transition ($T_3$) and which is subjected to a momentary interruption and subsequent restoration, the circuit arrangement being operable in cooperation with a processing device (38) which is selectively in a reset state and a released state, and including release and reset control means (41) to be coupled to the voltage source means and to the processing device for enabling (OUT) the processing device to be in the released state at the first transition ($T_1$) delayed relative to a first time instant ($T_0$) at which the source switch is closed, to be in the reset state during the momentary interruption beginning without substantial delay relative to the second transition ($T_3$) at which the source switch is opened, and to be again in the released state at a fifth time instant ($T_5$) delayed relative to a fourth time instant ($T_4$) at which restoration occurs from the momentary interruption, the circuit arrangement comprising pattern producing means (51) to be coupled to the voltage means for producing a pattern signal representative of a predetermined pattern at the first transition, so that a predetermined initial operation is carried out by the processing device, characterised in that there is provided detecting means (55) arranged to be coupled to the voltage source means (21, 23, 24) for detecting the first transition ($T_1$) and the restoration in order to produce an enable signal (SW) lasting from the first time instant ($T_0$) to a second time instant ($T_2$) later than the first transition ($T_1$); and signal supplying means (56) coupled between the voltage source means and the pattern producing means (51) and controlled by the detecting means (55), so that said pattern signal is supplied to the processing device (38) in the time interval lasting from the first transition ($T_1$) to the second time instant ($T_2$) in response to

the enable signal to make the processing device (38) distinguish between the first transition and the restoration thereby to carry out a predetermined initial operation in response to the enable signal.

2. A circuit arrangement as claimed in claim 1, characterised in that the momentary interruption is shorter than a first predetermined duration, the processing device (38) being capable of carrying out the predetermined initial operation within a second predetermined duration, wherein the detecting means (55) includes: threshold means (62, 63) to be coupled to the voltage source means for voltage dividing the source voltage to provide a prescribed reference voltage ($V_a$) specified by a voltage divided source voltage, a time constant circuit (66, 67) having a predetermined time constant and to be energised by the source voltage for providing a variable voltage ($V_B$) which is gradually variable at a rate determined by the predetermined time constant after each of the first and the second transitions and upon occurrence of the momentary interruption, the predetermined time constant being selected in consideration of the first and the second predetermined durations, and the prescribed reference voltage; comparing means (71) coupled to the threshold means and time constant circuit for comparing the variable voltage with the prescribed reference voltage to produce a first and a second signal when the variable voltage is not higher and is higher than the prescribed reference voltage, respectively; and means (76) responsive to the first and second signals for producing the enable signal only in response to the first signal.

3. A circuit arrangement as claimed in claim 2 characterised in that the time constant circuit (66, 67) has a time constant such that the variable voltage does not become lower than the prescribed reference voltage within the first predetermined duration and is kept lower than the prescribed reference voltage within the second predetermined duration after the first transition.

**Patentansprüche**

1. Schaltungsanordnung zur Verwendung in Kombination mit einem Spannungsquellenschalter (27) und einer Spannungsquelle, die in Verbindung mit dem Quellenschalter betrieben wird, zum Erzeugen einer Quellenspannung, die die Schaltungsanordnung, wahlweise bei einem ersten Übergang ($T_1$) von einem nicht angeregten Zustand in einen angeregten Zustand überführt, und bei einem zweiten Übergang ($T_3$) von dem angeregten Zustand in den nicht angeregten Zustand zurücküberführt und die zeitweise unterbrochen und darauffolgend wieder hergestellt wird, wobei die Schaltungsanordnung in Verbindung mit einer Verarbeitungseinrichtung (38), die wahlweise in einem zurückgesetzten Zustand und einem freigegebenen Zustand ist, betrieben wird und eine Freigabe- und Rücksetzsteuereinrichtung (41) aufweist, die mit der Spannungsquelle und der Verarbeitungseinrichtung verbunden ist, wodurch die Verarbeitungseinrichtung so angesteuert wird (OUT), daß sie bei dem ersten Übergang ($T_1$), der gegenüber einem ersten Zeitpunkt ($T_0$) verzögert ist, zu dem der Quellenschalter geschlossen wird, in dem freigegebenen Zustand ist, daß sie während der zeitweisen Unterbrechung, die ohne wesentliche Verzögerung, bezogen auf den zweiten Übergang ($T_3$), an dem der Quellenschalter geöffnet wird, in dem zurückgesetzten Zustand ist, und daß sie erneut zu einem fünften Zeitpunkt ($T_5$), der bezogen auf einen vierten Zeitpunkt ($T_4$) zu dem die Wiederherstellung nach der zeitweisen Unterbrechung eintritt, in dem zurückgesetzten Zustand ist, wobei die Schaltungsanordnung mit der Spannungsquelle verbundene Mustererzeugungseinrichtungen (51) aufweist zum Erzeugen eines Mustersignals, das beim ersten Übergang ein bestimmtes Muster darstellt, so daß durch die Verarbeitungseinrichtung ein bestimmter Startbetrieb ausgeführt wird, gekennzeichnet durch Detektoreinrichtungen (55), die so angeordnet sind, daß sie mit der Spannungsquelle (21, 23, 24) verbunden sind, zum Detektieren des ersten Übergangs ($T_1$) und der Wiederherstellung, um dadurch ein Freigabesignal (SW) zu erzeugen, das von dem ersten Zeitpunkt ($T_0$) bis zu einem zweiten nach dem ersten Übergang ($T_1$) liegenden Zeitpunkt ($T_2$) dauert, und durch Signalliefereinrichtungen (56), die zwischen der Spannungsquelle und den Mustererzeugungseinrichtungen (51) geschaltet sind und so von der Detektoreinrichtung (55) gesteuert wird, daß das genannte Signal in dem vom ersten Übergang ($T_1$) bis zum zweiten Zeitpunkt ($T_2$) dauernden Zeitabschnitt in Abhängigkeit von dem Freigabesignal an die Verarbeitungseinrichtung (38) geliefert wird, wodurch die Verarbeitungseinrichtung (38) zwischen dem ersten Übergang und der Wiederherstellung unterscheiden kann und damit in Abhängigkeit von dem Freigabesignal einen bestimmtem Startbetrieb durchführen kann.

2. Schaltungsanordnung nach Anspruch 1, dadurch gekennzeichnet, daß die zeitweise Unterbrechung kürzer ist als eine erste festgelegte Zeitdauer, die Verarbeitungseinrichtung (38) in der Lage ist, innerhalb einer zweiten festgelegten Zeitdauer den festgelegten Startbetrieb durchzuführen, wobei die Detektoreinrichtung (55) aufweist: eine an die Spannungsquelle angeschlossene Schwellenspannungseinrichtung (62, 63) zum Aufteilen der Quellenspannung, um eine bestimmte durch eine spannungsgeteilte Quellenspannung definierte Referenzspannung ($V_a$) bereitzustellen, eine Zeitverzögerungsschaltung (66, 67), die eine bestimmte Zeitkonstante aufweist und von der Quellenspannung versorgt wird, zum Bereitstellen einer veränderbaren Spannung ($V_B$), die allmählich entsprechend einer durch die festgelegte Zeitkonstante bestimmten Geschwindigkeit veränderbar ist, nachdem der erste oder der zweite Übergang und die zeitweise Unterbrechung aufgetreten ist, wobei die festgelegte Zeitkonstante entsprechend der ersten und der zweiten festgelegten Zeitdauer und der bestimmten Referenzspannung ausgewählt ist, mit der Schwellenspannungseinrichtung und der Zeitverzögerungseinrichtung verbundene Vergleichereinrichtungen (71) zum Vergleichen der veränderbaren Spannung mit der bestimmten Referenzspannung, um so ein erstes und ein zweites Signal zu erzeugen, wenn die veränderbare Spannung entweder kleiner oder größer als die festgelegte Referenzspannung ist, und Einrichtungen (76), die auf das erste und das zweite Signal ansprechen, zum Erzeugen des Freigabesignal nur in Abhängigkeit von dem ersten Signal.

3. Schaltungsanordnung nach Anspruch 2, dadurch gekennzeichnet, daß die Zeitverzögerungsschaltung (66, 67) eine Zeitkonstante aufweist, wodurch die veränderbare Spannung innerhalb der ersten festgelegten Zeitdauer nicht kleiner als die festgelegte Referenzspannung wird und nach dem ersten Übergang innerhalb der zweiten festgelegten Zeitdauer unterhalb der festgelegten Referenzspannung gehalten wird.

**Revendications**

1. Ensemble de circuits destiné à être utilisé en combinaison avec un commutateur de source d'alimentation (27) et une source de tension pouvant fonctionner en coopération avec ce commutateur en vue d'engendrer une tension d'alimentation qui fait passer sélectivement l'ensemble de circuits d'un état de désexcitation à un état d'excitation à une première transition ($T_1$) et de l'état d'excitation à l'état de désexcitation à une deuxième transition ($T_3$), tout en étant soumise à une interruption momentanée suivie d'un rétablissement, cet ensemble de circuits pouvant fonctionner en coopération avec un dispositif de traitement (38) qui est sélectivement dans un état de remise à zéro et un état de déclenchement, tandis qu'il comprend un moyen de contrôle de déclenchement et de remise à zéro (41) destiné à être couplé à la source de tension et au dispositif de traitement en vue de valider (OUT) celui-ci pour l'amener dans l'état de déclenchement à la première transition ($T_1$) retardée par rapport à un premier moment ($T_0$) auquel le commutateur de source d'alimentation est fermé, pour l'amener dans l'état de remise à zéro au cours de l'interruption momentanée commençant sans retard important par rapport à la deuxième transition ($T_3$) à laquelle le commutateur de source d'alimentation est ouvert, ainsi que pour l'amener à nouveau dans l'état de déclenchement à un cinquième moment ($T_5$) retardé par rapport à un quatrième moment ($T_4$) auquel a lieu le rétablissement succédant à l'interruption momentanée, l'ensemble de circuits comprenant un moyen générateur de structure (51) destiné à être couplé à la source de tension en vue d'engendrer un signal de structure représentatif d'une structure prédéterminée à la première transition, de telle sorte qu'une opération initiale prédéterminée soit exécutée par le dispositif de traitement, caractérisé en ce qu'on prévoit un moyen de détection (55) conçu pour être couplé à la source de tension (21, 23, 24) en vue de détecter la première transition ($T_1$) et le rétablissement dans le but d'engendrer un signal de validation (SW) persistant depuis le premier moment ($T_0$) jusqu'à un deuxième moment ($T_2$) retardé par rapport à la première transition ($T_1$); ainsi qu'un moyen d'alimentation de signaux (56) couplé entre la source de tension et le moyen générateur de structure (51), tout en étant contrôlé par le moyen de détection (55), de telle sorte que le signal de structure soit acheminé au dispositif de traitement (38) dans l'intervalle de temps s'écoulant entre la première transition ($T_1$) et le deuxième moment ($T_2$) en réponse au signal de validation afin que le dispositif de traitement (38) établisse une distinction entre la première transition et le rétablissement pour exécuter ainsi une opération initiale prédéterminée en réponse au signal de validation.

2. Ensemble de circuits selon la revendication 1, caractérisé en ce que l'interruption momentanée est plus courte qu'une première durée prédéterminée, le dispositif de traitement (38) étant à même d'éxecuter l'opération initiale prédéterminée au cours d'une deuxième durée prédéterminée, tandis que le moyen de détection (55) comprend: un moyen à seuil (62, 63) destiné à être couplé à la source de tension en vue de diviser la tension d'alimentation pour engendrer une tension de référence prescrite ($V_a$) spécifiée par une tension d'alimentation divisée, un circuit à constante de temps (66, 67) ayant une constante de temps prédéterminée et destiné à être excité par la tension d'alimentation en vue d'engendrer une tension ($V_b$) qui est progressivement variable à un rythme déterminé par la constante de temps prédéterminée après chacune des première et deusième transitions et lors de l'apparition de l'interruption momentanée, la constante de temps prédéterminée étant sélectionnée en tenant compte des première et deuxième durées prédéterminées, ainsi que de la tension de référence prescrite; un moyen comparateur (71) couplé au moyen à seuil et au circuit à constante de temps en vue de comparer la tension variable avec la tension de référence prescrite afin d'engendrer un premier et un deuxième signal lorsque la tension variable n'est pas et est supérieure à la tension de référence prescrite, respectivement; ainsi qu'un moyen (76) réagissant aux premier et deuxième signaux en vue d'engendrer le signal de validation uniquement en réponse au premier signal.

3. Ensemble de circuits selon la revendication 2, caractérisé en ce que le circuit à constante de temps (66, 67) a une constante de temps calculée de telle sorte que la tension variable ne descende pas en dessous de la tension de référence prescrite au cours de la première durée prédéterminée et qu'elle reste inférieure à la tension de référence prescrite au cours de la deuxième durée prédéterminée succédant à la première transition.

# 0 091 281

Fig.1

Fig.2

PRIOR ART

Fig.3

Fig.4

PRIOR ART

Fig.5

FROM 27

RESET CCT

TIME CONSTANT SECTION

PATTERN GEN.

MICRO-PROCESSOR

OUT

Fig.6

Fig.7

Fig.8

0 091 281

Fig.9

Fig.10

4